Europäisches Patentamt

European Patent Office

Office européen des brevets

(11) Veröffentlichungsnummer: **0 248 928**
.**A1**

(12) # EUROPÄISCHE PATENTANMELDUNG

(21) Anmeldenummer: **86107911.9**

(22) Anmeldetag: **10.06.86**

(51) Int. Cl.⁴: **G09F 3/00**

(43) Veröffentlichungstag der Anmeldung:
**16.12.87 Patentblatt 87/51**

(84) Benannte Vertragsstaaten:
**AT BE CH DE FR GB IT LI LU NL SE**

(71) Anmelder: **Latschbacher, Kajetan**
**Hauptstrasse 120**
**A-4484 Kronstorf(AT)**

(72) Erfinder: **Latschbacher, Kajetan**
**Hauptstrasse 120**
**A-4484 Kronstorf(AT)**

(74) Vertreter: **Vetter, Hans, Dipl.-Phys. Dr. et al**
**Patentanwalte Dipl.-Ing. Rudolf Magenbauer**
**Dipl.-Phys. Dr. Otto Reimold Dipl.-Phys. Dr.**
**Hans Vetter Hölderlinweg 58**
**D-7300 Esslingen(DE)**

(54) An zu kennzeichnenden Hölzern wie Baumstämmen, Kanthölzern, Pfosten, Brettern und dgl. befestigbarer und hierzu eine Befestigungseinrichtung aufweisender Informationsträger, insbesondere in Plättchenform.

(57) Es handelt sich úm einen insbesondere in Plättchenform (3) ausgebildeten Informationsträger, der an zu kennzeichnenden Hölzern wie Baumstämmen, Kanthölzern, Pfosten, Brettern und dgl. befestigbar ist. Hierzu weist er eine Befestigungseinrichtung auf. Ferner trägt er sich auf das zu kennzeichnende Holz beziehende Informationen in Form einer Codierung (9), die zur Erfassung mittels eines tragbaren Lesegerätes (18) maschinell lesbar ausgebildet ist.

Fig. 2

EP 0 248 928 A1

**An zu kennzeichnenden Hölzern wie Baumstämmen, Kanthölzern, Pfosten, Brettern und dgl. befestigbarer und hierzu eine Befestigungseinrichtung aufweisender Informationsträger, insbesondere in Plättchenform**

Die Erfindung betrifft einen an zu kennzeichnenden Hölzern wie Baumstämmen, Kanthölzern, Pfosten, Brettern und dgl. befestigbaren und hierzu eine Befestigungseinrichtung aufweisenden Informationsträger, insbesondere in Plättchenform, der sich auf das zu kennzeichende Holz beziehende Informationen in Form einer Codierung trägt.

Derartige Informationsträger, die vorwiegend in der Forst-und Holzwirtschaft zur Signierung von Holz, insbesondere von gefällten Baumstämmen, eingesetzt werden, sind bereits aus der DE-OS 1 761 200 bekannt geworden. Sie sind in Form eines Plättchens ausgebildet, das an seiner einen Plattenseite eine Befestigungseinrichtung mit mehreren widerhakenförmigen Befestigungs fortsätzen aufweist. Zur Befestigung wird das Plättchen an das zu signierende Holz angeschlagen, wobei die Fortsätze in das Holz eindringen und dadurch das Plättchen fest verankern. Die andere Plattenseite trägt eine Codierung in Form einer aufgedruckten Zahlenkombination. Die zu signierenden Hölzer werden nun jeweils mit einem Informationsträger mit einer ihm eigenen Zahlenkombination versehen, und gleichzeitig wird eine Liste angelegt, wo diese Zahlenkombinationen nochmals notiert sind, und wo zu jeder Zahlenkombination die Daten des entsprechenden signierten Holzes aufgeführt sind. Diese Daten sind beispielsweise die Holzart, Holzsorte, Güteklasse, Länge, Durchmesser, Rindenabzug, Kubatur oder die Stärkeklasse. Mit Hilfe der Codierung läßt sich das jeweilige Holz später bei der Verladung, Abfuhr, Verarbeitung od. dgl. wieder identifizieren, und über die Aufzeichnungen der Liste lassen sich auch die ursprünglich ermittelten Holzdaten wieder eindeutig reproduzieren. Nachteilig ist dabei allerdings, daß sich beim nachträglichen Ablesen der Zahlenkombination häufig Ablesefehler einschleichen, begünstigt durch die Tatsache, daß die Zahlencodierung regelmäßig vierstellig ist, so daß die dementsprechend aus der Aufzeichnungsliste entnommenen Holzdaten oftmals falsch sind. Hierdurch kommt die gesamte Datenverwaltung in Unordnung, was dazu führen kann, daß fehlerhafte Kundenrechnungen ausgestellt werden, oder daß der Überblick über die zu verwaltenden Hölzer verlorengeht. Hinzu kommt, daß die Zahlencodierungen in aufwendiger Weise einzeln notiert werden müssen, um sie mit der oben erwähnten Aufzeichnungsliste vergleichen zu können, was einen hohen, zeit-und kostenintensiven Verwaltungsaufwand hervorruft.

Es ist die Aufgabe der Erfindung, einen Informationsträger gemäß der eingangs genannten Art zu schaffen, der einfach und kostengünstig herstellbar ist und anhand dessen sich eine zeitsparende, zuverlässige Identifikation der einzelnen Hölzer durchführen läßt.

Diese Aufgabe wird dadurch gelöst, daß die Codierung zur Erfassung mittels eines tragbaren Lesegerätes maschinell lesbar ausgebildet ist. Die maschinelle Lesbarkeit der Codierung schließt Ablesefehler praktisch völlig aus, so daß mit Sicherheit immer die richtige Identifikation des jeweils gekennzeichneten Holzes erfolgt. Darüber hinaus wird der Zeitaufwand zur Erfassung der Codierung ganz beträchtlich reduziert, da ein handschriftliches Niederschreiben der gelesenen Codierung nicht mehr erforderlich ist. Dem Lesegerät ist eine elektronische Speichereinheit angeschlossen, welche die abgelesenen Codierungen speichert und in einer für den Menschen erkennbaren und deutbaren Form in der eingebauten Anzeige darstellt. Zweckmäßigerweise kann das Lesegerät an einen Computer angeschlossen werden, in den die oben erwähnten Holzdaten unter dem entsprechenden Code abgespeichert sind, so daß diese Holzdaten unmittelbar über die vom Lesegerät erfaßte Codierung mit hoher Präzision abrufbar sind. Da die Codierung von einem tragbaren Lesegerät gelesen werden kann, ist auch an schwer zugänglichen Orten, z.B. auf Holzlagerplätzen im Wald, eine einfache Ablesbarkeit der Codierung gewährleistet. Die Auswertung der Codierung kann hier entweder direkt an Ort und Stelle mittels eines tragbaren Kleincomputers erfolgen, oder aber die einzelnen erfaßten und gespeicherten Codierungen werden von zentraler Stelle aus, z. B. im Büro, ausgewertet. Bei alledem ist der Aufbau des erfindungsgemäßen Informationsträgers sehr einfach, die Codierung kann beispielsweise bei der Fertigung des Trägers unmittelbar angebracht werden.

Vorteilhafte Weiterbildungen der Erfindung sind in den Unteransprüchen aufgeführt.

Die Weiterbildung nach Anspruch 2 beschreibt eine besonders günstige Ausführungsform der Codierung, die sich sehr zuverlässig und mit einfachsten Lesegeräten, z.B. einem Lichtgriffel, lesen läßt, der zur Erfassung der Strichcodierung einfach über diese quer zu den einzelnen Strichlängsrichtungen hinwegbewegt wird.

Die Weiterbildungen nach den Ansprüchen 4 und 5 sind besonders kostengünstig herstellbar, beispielsweise indem die Markierungen auf dem Informationsträger aufgedruckt werden.

Bei den Weiterbildungen nach den Ansprüchen 6 und 7 ist die Codierung besonders lange haltbar und unverwüstbar, so daß sie auch nach Jahren noch zuverlässig lesbar ist. Zweckmäßigerweise besteht dabei der gesamte Informationsträger aus Kunststoffmaterial, und die Herstellung der Codierung kann auf einfache Weise mittels Heißprägewerkzeugen erfolgen, mit denen die einzelnen Markierungen in Form von Einprägungen dauerhaft in das Informationsmaterial einbringbar sind. Eine farbliche Kennzeichnung der Markierung ist hierbei ebenso wie bei den Ausführungsbeispielen nach den Ansprüchen 10 und 11 nicht erforderlich, wenn ein entsprechend angepaßtes Lesegerät verwendet wird. Allerdings können die Markierungen auch farblich gekennzeichnet werden, was insbesondere bei den Ausführungsbeispielen nach den Ansprüche 6 und 7 den Vorteil hat, daß die Farbe vor Abrieb geschützt ist, da sie vertieft im Informationsträger angeordnet ist. Anstelle der Vertiefungen können die Codierungen auch in Form von Ausstanzungen gemäß Anspruch 9 hergestellt werden.

Die Verwendung magnetischer Codierungsträger gemäß den Ansprüchen 12 bis 14 erlaubt die Aufnahme einer Vielzahl magnetisch codierter Informationen, wobei diese besonders einfach und kostengünstig aufgebracht, geändert, gelöscht, modifiziert und mittels eines geeigneten Magnetcode-Lesers erfaßt werden können. Besonders zweckmäßig ist dabei das Aufkleben eines Magnetplättchens, eines Magnetstreifens oder einer Magnetfolie sowie das Aufspritzen, Aufsprühen und Auftragen eines Magnetstaubs.

Die Codierung kann gamäß Anspruch 15 eine Signatur und dabei insbesondere die laufende Nummer. des jeweiligen Holzes repräsentieren, sie kann jedoch auch, wie dies beim Ausführungsbeispiel nach Anspruch 16 der Fall ist, direkt die Holzdaten wie Holzart, Holzsorte usw. enthalten. Letzteres hat den Vorteil, daß keine Speichereinrichtungen erforderlich sind, um die Holzdaten extern abzuspeichern, vielmehr sind diese Daten direkt in den jeweiligen Informationsträger integriert.

Bei der Weiterbildung nach Anspruch 17 ist die Codierung sowohl visuell lesbar und deutbar als auch maschinell lesbar.

Die Weiterbildung nach Anspruch 18 hat den Vorteil, daß die auf dem Informationsträger enthaltene Information auch dann ablesbar ist, wenn kein Lesegerät zur Verfügung steht. Dies erweitert den Anwendungsbereich der Erfindung.

Nachfolgend wir die Erfindung anhand der beiliegenden Zeichnung näher erläutert. In dieser zeigen:

Fig. 1 eine Draufsicht auf eine Ausführungsform des erfindungsgemäßen Informationsträgers,

Fig. 2 eine perspektivische Ansicht des Informationsträgers aus Fig. 1, wobei die Codierung durch das gestrichelt umrahmte Feld schematisch angedeutet ist und wobei gezeigt ist, wie ein Lesen der Codierung mittels eines Lichtgriffels bzw. eines Magnetcodelesers erfolgt, und

Fig. 3 eine weitere Ausführungsform des erfindungsgemäßen Informationsträgers in einer Schnittdarstellung gemäß der Schnittlinie III-III aus Fig. 1, wobei die Markierungen der Codierung als Vertiefungen ausgebildet sind.

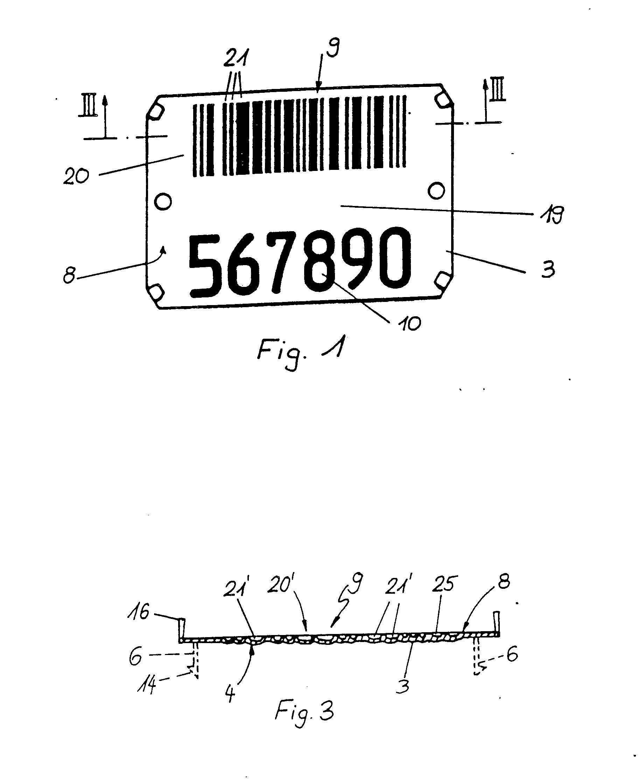

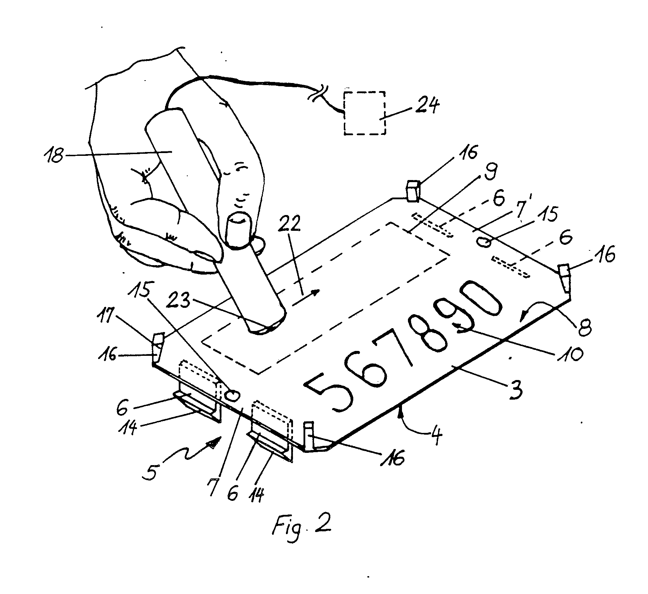

Anhand der Fig. 1 und 2 soll zunächst eine erste Ausführungsform des erfindungsgemäßen Informationsträgers beschrieben werden. Er weist im wesentlichen Plättchenform auf und enthält ein Tragplättchen 3 mit relativ geringer Dicke und das im wesentlichen rechteckförmig ausgebildet ist. An seiner einen flächigen Plattenseite, der Unterseite 4, trägt es eine Befestigungseinrichtung 5, die vier Befestigungsfortsätze 6 enthält, von denen jeweils zwei im Bereich einer der beiden Schmalseiten 7 bzw. 7′ des Tragplättchens 3 angeordnet ist. An der Plättchenoberseite 8 befindet sich eine maschinenlesbare Codierung 9 sowie eine zusätzliche visuell erkennbare und direkt deutbare Zusatzcodierung 10. Selbstverständlich ist eine derartige Codierung nicht auf eine Nummer beschränkt, sondern kann eine große Zahl von Informationen beinhalten.

Der erfindungsgemäße Informationsträger dient zur Kennzeichnung von Hölzern und hierbei insbesondere von Stammhölzern. Soll beispielsweise ein Baumstamm gekennzeichnet werden, so wird der Informationsträger mit seiner Unterseite 4 voraus an die Stammstirnseite angeschlagen, wobei die Befestigungsfortsätze 6 in das Holzmaterial eindringen, so daß das Tragplättchen 3 mit seiner Unterseite 4 flächig am Holz zur Anlage kommt. Die Befestigungsfortsätze 6 ragen im wesentlichen rechtwinklig zur Tragplättchenebene vom Tragplättchen 3 weg und sind an ihrem dem Tragplättchen entgegengesetzten Endbereich jeweils mit einem widerhakenförmigen Zahn versehen. Dieser verhakt sich im Holz und verhindert, daß das Tragplättchen 3 ungewollt vom gekennzeichneten Holz abfällt.

Die beiden einer jeden Schmalseite 7 bzw. 7′ zugeordneten Befestigungsfortsätze 6 sind in Längsrichtung des Plättchens 3 gesehen links und rechts der Längsachse mit Abstand zueinander angeordnet, und zwischen ihnen befindet sich jeweils eine kleine Durchgangsöffnung 15, durch die ein Nagel od. dgl. Befestigungselement hindurchsteckbar ist, um das Tragplättchen 3 zusätzlich an dem zu kennzeichnenden Holz zu verankern.

Das Tragplättchen 3 besteht aus Kunststoffmaterial, so daß es bei späterem Zersägen des zu kennzeichnenden Holzes nicht abgenommen werden muß, es läßt sich vielmehr ohne Beschädigung der Säge durchtrennen. Die Befestigungsfortsätze 6 sind vorzugsweise einstückig an das Tragplättchen 3 angeformt, z.B. im Rahmen eines Spritzgießverfahrens, desgleichen ist der Fall hinsichtlich vier Fixierarmen 16, von denen jeweils einer in einem der Eckenbereiche des Rechteckplättchens angeordnet ist. Diese Fixierarme 16 befinden sich am Plättchenrand und ragen über die Oberseite 8 vor, d. h. ausgehend von der Tragplättchenebene weisen sie in die entgegengesetzte Richtung wie die Befestigungsfortsätze 6. Gleichzeitig ragen sie mit ihrem freien Endbereich 17 ein Stück weit über die Fläche der Oberseite 8 nach innen, wozu der Endbereich 17 verbreitert oder nockenartig ausgebildet ist. Somit läßt sich das Tragplättchen 3 mit Hilfe der Fixierarme 16 an die Schlagfläche eines nicht dargestellten und entsprechend ausgebildeten Hammers lösbar anclipsen, so daß es mit einem einzigen Schlag mit seinen Befestigungsfortsätzen in das zu kennzeichnende Holzmaterial eintreibbar ist, ohne daß es selbst dabei Schaden nimmt.

Der erfindungsgemäße Informationsträger weist an seiner Oberseite 8 die bereits oben erwähnte Codierung 9 auf, die verschlüsselt ein oder vorzugsweise mehrere Informationen enthält und die derart ausgebildet ist, daß sie insbesondere mittels eines tragbaren Lesegerätes 18 maschinell lesbar ist.

Die Verwendung der erfindungsgemäßen Informationsträger erfolgt vorzugsweise folgendermaßen:
Jedes zu signierende Holz wird mit einem der Informationsträger versehen, und gleichzeitig werden separat unter der in der Codierung enthaltenen Nummer die sich auf das jeweils gekennzeichnete Holz beziehenden Holzdaten notiert. Letzteres kann handschriftlich erfolgen oder aber zweckmäßigerweise mittels eines elektronischen Speichergerätes (nicht dargestellt), in das einfach die jeweilige Nummer und die zugehörigen Daten eingegeben und darin abgespeichert werden. Soll nun zu einem späteren Zeitpunkt ein mit einem der Informationsträger gekennzeichnetes Holz identifiziert werden, so wird einfach, schnell und zuverlässig die Codierung 9 mittels des Lesegerätes 18 gelesen und erfaßt. Die erfaßte Codierung kann dann entschlüsselt zur Anzeige gebracht werden, so daß die dann kenntliche Nummer mit den notierten Daten verglichen werden kann; bevorzugt wird aber die vom Lesegerät 18 erfaßte Information direkt dem elektronischen Speicher zugeführt, z.B. über einen Computer, der dann selbsttätig die zu der erfaßten Nummer gehörigen Holzdaten aussucht und diese zusammen mit der entschlüsselten Nummer zur Anzeige bringt. Im letztgenannten Fall erfolgt die Identifizierung der einzelnen Hölzer mit größtmöglicher Sicherheit, da keinerlei Ablese-oder Schreibfehler auftreten können. Mittels dieses tragbaren Computers können auch Holzdaten in einen Großspeicher oder eine Diskette übertragen oder von dort zurückübertragen werden. Der Computer selbst kann ebenfalls eine Diskette oder einen elektronischen Festkörper-Massenspeicher aufweisen. Auf diese Weise können auch Holzabfuhren, Verladungen und andere Manipulationen erfaßt und ausgewertet werden. Dies gibt z. B. die Möglichkeit, daß unmittelbar nach der Abnahme der Codezahlen mit dem Computer Lieferschein- und Rechnungsausdrucke an Ort und Stelle der Holzübernahme gemacht werden können. Hierzu brauchen lediglich die Codierungen 9 der zu identifizierenden Hölzer oder der betreffenden Hölzer nacheinander abgelesen werden. Anstelle der direkten Auswertung können diese Informationen auch lediglich zwischengespeichert werden, wobei die Auswertung dann stationär mit Hilfe eines Datenaustausches mit einer stationären Rechenheit erfolgen kann.

Die in den Fig. 1 und 2 abgebildete vorteilhafte Ausführungsform eines Informationsträgers trägt neben der maschinell lesbaren Codierung 9 ebenfalls an seiner Oberseite 8 die visuell unmittelbar von einer Person erkennbare Zusatzcodierung 10, die in der Codierung 9 enthalten ist, d. h. beim Ausführungsbeispiel ist hier eine in der Codierung 9 verschlüsselte Nummer direkt durch aufgestempelte Zahlen kenntlich gemacht. Dadurch wird die Kennzeichnung der einzelnen Hölzer erleichtert, da hier sofort erkennbar ist, welche Nummer das befestigte Tragplättchen trägt, und darüber hinaus kann die spätere Identifikation bei Nichtvorliegen eines entsprechenden Lesegerätes auch unmittelbar visuell erfolgen, wobei dann allerdings nicht alle Daten erkennbar sind.

Zwischen den beiden Codierungen 9, 10 auf der Plättchenoberseite 8 befindet sich ein Freiraum 19, der genutzt werden kann, um beispielsweise den Namen des Holzeigentümers oder des Waldstückes, in dem der gekennzeichnete Baum gefällt wurde, aufzubringen.

Als maschinenlesbare Codierung 9 kann jede dafür geeignete Codierung verwendet werden. Es ist sogar möglich, die Codierung 9 sowohl maschinenlesbar als auch direkt visuell erkennbar auszubilden, so daß auf eine Zusatzcodierung 10 verzichtet werden kann. Ein Beispiel für eine derartige Codierung wäre, die jeweilige Plättchennummer als erhabener Schriftzug auf die Plättchenoberseite aufzubringen, so daß sie ohne Schwierigkeiten lesbar ist, aber auch mit einem entsprechenden Lesegerät abgetastet werden kann. Diese Ausführungsform ist in den Figuren nicht dargestellt.

Vorteilhafterweise repräsentiert die maschinenlesbare Codierung jedoch eine Mehrzahl von Informationen, insbesondere direkt die sich auf das gekennzeichnete Holz beziehenden Holzdaten. Hierbei ist ein passendes Codiergerät erforderlich, mit dem nach Erstellung des Aufmaßes des jeweiligen Holzes die entsprechende Codierung auf dem Tragplättchen 3 angebracht werden kann. Somit erübrigt sich eine ausführliche, aufwendige Speicherung und Verwaltung der einzelnen Holzarten.

Bei den in den Figuren abgebildeten Tragplättchen 3 ist als Codierung 9 jeweils eine Strichcodierung 20 bzw. 20' gewählt, die eine Vielzahl in Plättchenlängs richtung aufeinanderfolgend sowie parallel und im Abstand zueinander angeordnete strichförmige Markierungen 21 bzw. 21' enthält. Diese heben sich farblich gegenüber den benachbarten Bereichen der Plättchenoberseite 8 ab, vorzugsweise sind sie in schwarzer Farbe ausgeführt, und das Plättchen selbst weist eine demgegenüber kontrastreiche helle Färbung auf. Es handelt sich also bei diesen in den Fig. 1 und 2 verwendeten Markierungen 21 um Farbmarkierungen, die direkt auf die Oberseite 8 aufgebracht sind. Die Codierung der Information erfolgt hierbei durch die Wahl entsprechender Dickenabmessungen und/oder Abstände der einzelnen Markierungen 21, und das Lesen wird mittels eines als Lichtgriffel ausgebildeten Lesegerätes 18 durchgeführt, das hierbei mit seinem Sensor 23 in Codierungslängsrichtung gemäß Pfeil 22 über die Strichcodierung 20 hinweggeführt wird, wie dies in Fig. 2 angedeutet ist. Das Lesegerät 18 ist an eine bei 24 gestrichelt angedeutete Speichereinheit, einen Computer od. dgl., angeschlossen.

Auch bei der Weiterbildung nach Fig. 3 ist die Codierung 9 als Strichcodierung 20' ausgebildet, deren Markierungen 21' sind aber in Form länglicher Vertiefungen 25 in . die Plättchenoberseite 8 eingelassen. Anstelle von Vertiefungen sind auch Ausstanzungen möglich und geeignet. Die Codierung der jeweiligen Information kann hier über verschiedene Markierungstiefen erfolgen (nicht dargestellt), wird beim Ausführungsbeispiel jedoch durch unterschiedliche Vertiefungsbreiten (in Leserichtung 22 gesehen) bzw. Ausstanzbreiten erzielt. Zusätzlich kann der Grund der einzelnen Vertiefungen in einer gegenüber der Umgebung der Markierungen 21' kontrastreichen Farbe eingefärbt sien, so daß auch hier das Lesen der Codierung mittels eines Lichtgriffels od. dgl. erfolgen kann.

Die Ausführung der Markierungen als Vertiefungen oder Ausstanzungen hat den Vorteil, daß eine von Witterungseinflüssen unabhängige, auch nach langer Zeit noch lesbare Codierung erreicht wird. Selbst gegen mechanische Einflüsse ist eine derartige Codierung resistent. Ist der Grund der Vertiefungen 25 eingefärbt, so hat die vertiefte Lage den Vorteil, daß die Farbe beim Handhaben des jeweiligen Holzes nicht versehentlich abgekratzt werden kann, so daß auch hier eine dauerhafte Codierung gegeben ist. Der Strichcode ist praktisch ins Plättchen integriert und noch jahrelang ablesbar.

Die Fertigung der Vertiefungen 25 aufweisenden Codierung erfolgt zweckmäßigerweise in sogenannten Heißprägewerken, wo das aus Kunststoff bestehende Tragplättchen 3 lokal angewärmt und mittels entsprechend der gewünschten Codierung angeordneten Stempeln die Markierungen in Form von Einprägungen eingebracht werden.

Zweckmäßigerweise wird man das Tragplättchen aus dunklem Kunststoffmaterial herstellen, anschließend die Einprägung anbringen und sodann das Plättchen in der Ebene seiner Oberseite 8 mit heller Farbe lackieren, so daß sich die vertieften Markierungen kontrastreich abheben.

Bei einem nicht dargestellten Ausführungsbeispiel ist vorgesehen, die Markierung der Codierung in Form von Erhebungen auszubilden und die in der Codierung enthaltene Information mittels Wahl entsprechender Höhe oer Breite der Erhebungen zu verschlüsseln.

Hinsichtlich der Ausführungsform nach Fig. 3 sei noch darauf hingewiesen, daß das dort abgebildete Tragplättchen 3, mit Ausnahme der Vertiefungen, der in Fig. 1 und 2 abgebildeten Ausführungsform entspricht, gleiche Teile wurden daher mit identischen Bezugszeichen versehen.

Die Codierung 9 kann jedoch auch als magnetische Codierung auf einem magnetischen Codierungsträger aufgebracht sein. Dieser kann ein Magnetplättchen, ein Magnetstreifen, eine Magnetfolie oder eine Magnetstaubschicht sein. Der jeweilige Träger kann entweder auf die Oberfläche aufgebracht, insbesondere aufgeklebt sein, oder aber in eine entsprechende Vertiefung eingelegt sein. Im Falle einer Ausbildung als Magnetstaub kann dieser aufgespritzt, aufgesprüht oder vorzugsweise mit einem Pinsel aufgetragen sein. Zur Erleichterung des Aufbringens ist der Magnetstaub dabei mit einem Bindemittel versehen. Zum Auslesen der in der magnetischen Codierung enthalten Informationen dient anstelle des Lichtgriffels ein entsprechender Magnetcodeleser. Die magnetische Codierung hat zum einen den Vorteil, daß eine größere Zahl von Informationen auf kleinem Raum aufgebracht werden kann und zum anderen, daß die Codierung bei bereits in ein Holz eingeschlagenem Plättchen noch nachträglich verändert werden oder überhaupt nachträglich aufgebracht werden kann. Der Magnetcodeleser wird in diesem Falle als kombinierter Magnetcodelser/-schreiber ausgebildet. Die einzugebende Information wird dabei in den tragbaren Computer eingegeben, und dieser überträgt die entsprechenden Informationen als magnetische Codierung auf das Plättchen.

**Ansprüche**

1. An zu kennzeichnenden Hölzern wie Baumstämmen, Kanthölzern, Pfosten, Brettern und dgl. befestigbarer und hierzu eine Befestigungseinrichtung (5) aufweisender Informationsträger, insbesondere in Plättchenform (3), der sich auf das zu kennzeichnende Holz beziehende Informationen in Form einer Codierung (9) trägt, dadurch gekennzeichnet, daß die Codierung (9) zur Erfassung mittels eines tragbaren Lesegerätes (18) maschinell lesbar ausgebildet ist.

2. Informationsträger nach Anspruch 1, dadurch gekennzeichnet, daß die Codierung (9) eine Strichcodierung (20, 20') mit mehreren parallel und mit Abstand zueinander angeordneten strichförmigen Markierungen (21, 21') ist.

3. Informationsträger nach Anspruch 2, dadurch gekennzeichnet, daß die einzelnen Markierungen (21, 21') eine unterschiedliche Dicke aufweisen können.

4. Informationsträger nach einem der Ansprüche 1 bis 3, dadurch gekennzeichnet, daß die Codierung (9) sich farblich gegenüber den benachbarten Bereichen des Informationsträgers abhebende Markierungen (21, 21') aufweist.

5. Informationsträger nach einem der Ansprüche 1 bis 4, dadurch gekennzeichnet, daß die Codierung (9) Farbmarkierungen (21) aufweist.

6. Informationsträger nah einem der Ansprüche 1 bis 4, dadurch gekennzeichnet, daß die Codierung (9) eine Mehrzahl von in Form von Vertiefungen (25) oder Ausnehmungen ausgebildeten Markierungen (21') aufweist.

7. Informationsträger nach Anspruch 6, dadurch gekennzeichnet, daß die einzelnen Markierungen (21') unterschiedliche Tiefen aufweisen können.

8. Informationsträger nach Anspruch 6 oder 7, dadurch gekennzeichnet, daß die Codierung (9) von Kunststoffmaterial getragen ist, wobei die Vertiefungen (25) mittels eines Heißprägevorganges in das Kunststoffmaterial eingebrachte Einprägungen sind.

9. Informationsträger nach Anspruch 6, dadurch gekennzeichnet, daß der plättchenförmig ausgebildete Informationsträger zur Codierung Ausstanzungen aufweist, und insbesondere aus Kunststoffmaterial besteht.

10. Informationsträger nach einem der Ansprüche 1 bis 4, dadurch gekennzeichnet, daß die Codierung (9) mehrere in Form von Erhebungen ausgebildete Markierungen aufweist.

11. Informationsträger nach Anspruch 10, dadurch gekennzeichnet, daß die Erhebungen unterschiedliche Höhe aufweisen können.

12. Informationsträger nach einem der Ansprüche 1 bis 3, dadurch gekennzeichnet, daß ein magnetischer Codierungsträger, insbesondere ein Magnetplättchen, ein Magnetstreifen, eine Magnetfolie oder ein Magnetstaub, aufgebracht oder eingelegt ist.

13. Informationsträger nach Anspruch 12, dadurch gekennzeichnet, daß der Codierungsträger aufgeklebt ist.

14. Informationsträger nach Anspruch 12, dadurch gekenn zeichnet, daß ein vorzugsweise mit einem Bindemittel versehener Magnetstaub aufgespritzt, aufgesprüht oder mit einem Pinsel aufgetragen wird.

15. Informationsträger nah einem der Ansprüche 1 bis 14, dadurch gekennzeichnet, daß die von der Codierung (9) repräsentierte Information eine Signatur, z.B. eine Nummer, ist.

16. Informationsträger nach einem der Ansprüche 1 bis 15, dadurch gekennzeichnet, daß die Codierung (9) eine Mehrzahl von Informationen repräsentiert, die sich unmittelbar auf das zu kennzeichnende Holz beziehende Daten, wie Holzart, Holzsorte, Güteklasse, Länge, Durchmesser od. dgl., enthalten.

17. Informationsträger nach einem der Ansprüche 1 bis 16, dadurch gekennzeichnet, daß die Codierung (9) auch visuell lesbar und deutbar ist.

18. Informationsträger nach einem der Ansprüche 1 bis 17, dadurch gekennzeichnet, daß eine aus Ziffern und/oder Zahlen bestehende Zusatzcodierung (10) vorhanden ist, die visuell lesbar und maschinenlos deutbar ist und die zweckmäßigerweise inhaltlich dem Inhalt der ersten, maschinenlesbaren Codierung (9) entspricht.

Fig. 1

Fig. 3

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,A | US-A-4 272 327 (LOGAN)<br><br>* Figuren 1-3; Spalte 2, Zeilen 40-64 *<br><br>--- | 1,16, 17 | G 09 F 3/00 |
| D,Y | FR-A-1 577 395 (LATSCHBACHER)<br><br>* Figuren 11-20,37,38; Seite 6, Zeilen 18-30; Seite 7, Zeilen 15-30; Seite 8, Zeilen 1-9; Seite 14, Zeilen 11-30; Seite 15, Zeilen 1-6 * | 1,16, 17 | |
| A | | 8,9,12 | |
| | --- | | |
| A | GB-A-2 124 967 (HAMILTON MACHINERY SALES LTD.)<br>* Insgesamt * | 1-3,6-15 | RECHERCHIERTE SACHGEBIETE (Int. Cl.4) |
| | --- | | G 09 F |
| A | GB-A- 452 259 (FICHTHORN)<br>* Insgesamt * | 1,6,10 | |
| | --- | | |
| A | US-A- 954 924 (BROOKS)<br>* Insgesamt * | 1,6,10 | |
| | --- | | |
| A | US-A-4 204 639 (BARBER et al.) | | |
| | --- | | |
| A | US-A-4 476 381 (RUBIN)<br><br>--- -/- | | |

Der vorliegende Recherchenbericht wurde für alle Patentansprüche erstellt.

| Recherchenort | Abschlußdatum der Recherche | Prüfer |
|---|---|---|
| DEN HAAG | 10-02-1987 | ALLEN E.F. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 515 867 (RCA CORP.) | | |
| A | EP-A-0 109 707 (N.V.W.A. HOEK'S MACHINE- EN ZUURSTOFFABRIEK) | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 10-02-1987 | ALLEN E.F. |